# EUROPEAN PATENT SPECIFICATION

(11) **EP 2 160 118 B1**
(45) Date of publication and mention of the grant of the patent: **02.05.2012**
(21) Application number: 08760879.0
(22) Date of filing: 11.06.2008
(51) Int. Cl.: B62B 3/00, A47J 39/00, F25D 19/00, A47B 31/02

(54) **TROLLEY FOR CARRYING AND DISTRIBUTING FOOD TRAYS OR FOOD CONTAINERS IN GENERAL**
WAGEN FÜR DEN TRANSPORT UND DIE VERTEILUNG VON SPEISETABLETTS ODER LEBENSMITTELBEHÄLTERN IM ALLGEMEINEN
CHARIOT POUR TRANSPORTER ET DISTRIBUER DES PLATEAUX D'ALIMENTS OU DES CONTENANTS POUR ALIMENTS EN GÉNÉRAL

(30) Priority: 25.06.2007 IT MI20071272
(43) Date of publication of application: 10.03.2010
(73) Proprietor: Rational Production S.r.l., 24061 Albano S. Alessandro BG (IT)
(72) Inventor: CATTANEO, Ivan, I-24060 Carobbio Degli Angeli (IT); CATTANEO, Diego, I-24020 Ranica (IT)
(74) Representative: Modiano, Micaela Nadia
(86) International application number: PCT/EP2008/057331
(87) International publication number: WO 2009/000655

(56) References cited:
- WO-A-00/55556
- WO-A-97/09575
- US-A- 3 531 169
- US-A1- 2004 035 553

## Description

### Technical Field

The present invention relates to a trolley for carrying and distributing food trays or food containers in general.

### Background Art

Different types of trolleys for carrying and distributing food trays or food containers in general, such as for example baking pans, generally used to serve meals in facilities such as canteens, hospitals, communities or similar facilities, are known.

Some types of trolleys are composed simply of a box-like body which is substantially shaped like a parallelepiped and is mounted on wheels and in which there is a chamber which is designed to contain the trays or containers for foods in general. Such trolleys do not provide a particular performance as regards food preservation, but in view of their extreme structural simplicity they do not cause problems during their washing, which can be performed in washing tunnels or booths, by striking them with jets of hot water with the appropriate addition of detergent and/or sanitizing products.

More complex trolleys are also known which offer the possibility to bring to, and/or keep at, preset temperatures the foods being carried. Such types of trolleys also comprise a box-like body, usually shaped substantially like a parallelepiped, which is mounted on wheels and in which there is at least one chamber which is designed to contain the trays or containers of foods in general. Quite often, in these trolleys, in the box-like body there are two chambers, of which, when the meals are distributed, one is heated to contain foods to be served hot and the other one is cooled to contain foods to be served cold. In some types of trolleys, it is possible to provide cooling also for the chamber that is designed to be heated during the distribution of hot food, so as to preserve the foods during the period that elapses between their preparation and their distribution.

In order to keep the chambers at the desired temperature, adequate heating means, such as for example electrical resistors, and cooling means, such as for example evaporators of refrigeration circuits, are provided. Moreover, inside the chamber that contains the heating means there is generally at least one impeller which, by producing circulation of the air inside the chamber, levels the temperature in the different regions of the chamber.

The cooling means, the heating means and the impeller require a number of devices in order to be able to operate correctly, such as for example electric power supply circuits, refrigeration systems, electric motors and electronic circuits which are placed in a service compartment provided within the box-like body of the trolley and separated from the chamber that is designed to contain the foods.

The presence of this service compartment, which is necessary in order to ensure that the trolley has the required performance, is a problem during trolley washing. The service compartment, due to necessity and/or by choice in terms of production costs, is in fact not sealed hermetically and therefore is exposed to the danger of infiltrations of liquids or vapors during trolley washing, which might damage the electrical and/or electronic components arranged inside such service compartment.

For this reason, such types of trolleys cannot be washed in an automated manner within washing booths or tunnels by striking them with jets of pressurized water. Even by adopting particular refinements in the provision of the service compartment in order to prevent water sprays from being propelled into the service compartment, the service compartment would in any case be reached by the vapors generated during washing.

Besides, the provision of the service compartment with a hermetic seal would further raise the production cost of these trolleys, which is already in itself rather high due to the devices for heating and/or cooling the chamber that must contain the foods and due to the necessary control devices.

### Disclosure of the Invention

The aim of the present invention is to solve the problem described above by providing a trolley for carrying and distributing food trays or food containers in general, which is provided with means for bringing to, and/or keeping at, preset temperatures the food being carried, and which can be washed, even in an automated manner inside washing booths or tunnels, without causing problems for the electrical and/or electronic components with which it is provided.

Within this aim, an object of the invention is to provide a trolley for carrying and distributing food trays or food containers in general in which the electrical and/or electronic components can be protected adequately during washing without significantly raising the production costs of the trolley.

Another object of the invention is to provide a trolley which can be managed in an extremely simple and easy manner during washing operations.

Still another object of the invention is to provide a method for washing trolleys which is extremely simple and offers adequate assurances of protection of the electrical and/or electronic components arranged in the service compartment of the trolleys.

This aim and these and other objects which will become better apparent hereinafter are achieved by a trolley for carrying and distributing food trays or food containers in general, comprising a box-like body which is mounted on wheels, and in which there are at least one chamber for containing trays or containers of foods to be carried and distributed and at least one service compartment which contains electrical and/or electronic devices to bring to, or keep at, preset temperatures said at least one chamber, characterized in that said service compartment is connected to at least one port which can be connected to means for introducing a pressurized gas in order to pressurize said service compartment.

### Brief Description of the Drawings

Further characteristics and advantages of the invention will become better apparent from the description of a preferred but not exclusive embodiment of the trolley according to the invention, illustrated by way of non-limiting example in the accompanying drawings, wherein:
Figure 1 is a partially sectional perspective view of the trolley according to the invention during its washing inside a washing booth;
Figure 2 is a sectional view, taken along a vertical plane, of the trolley according to the invention during its washing inside a washing booth.

### Ways of carrying out the Invention

With reference to the figures, the trolley according to the invention, generally designated by the reference numeral 1, comprises a box-like body 2, preferably shaped substantially like a parallelepiped, which is mounted on wheels 3 and inside which there are at least one chamber 4 for containing trays or containers of foods to be carried and distributed and at least one service compartment 5 which contains electrical and/or electronic devices for bringing to, or keeping at, preset temperatures the chamber 4.

According to the invention, the service compartment 5 is connected to at least one port 6 which is arranged preferably on the outer side of the box-like body 2 and can be connected to means 7 for introducing a pressurized gas in order to pressurize the service compartment 5.

The side walls of the box-like body 2 comprise, in a per se known manner, one or more doors 8 which can be opened to access the chamber 4.

Depending on the requirements, inside the box-like body 2 it is possible to define a single chamber 4 or a plurality of chambers 4 arranged side by side, which can be brought to, and/or kept at, mutually different temperatures.

In the illustrated embodiment, there is a chamber 4 which is divided by a vertical partition 9 into two half-chambers 4a and 4b, one of which accommodates heating means in order to keep it at a temperature which is higher than the ambient temperature, while the other half-chamber accommodates cooling means in order to keep it at a temperature which is lower than the ambient temperature.

The heating means can be constituted, in a per se known manner, by electrical resistors, while the cooling means can be constituted by the evaporator of a refrigeration circuit.

Inside one or both of the half-chambers 4a, 4b it is possible to provide one or more fans 10 for leveling the temperature in the corresponding half-chamber.

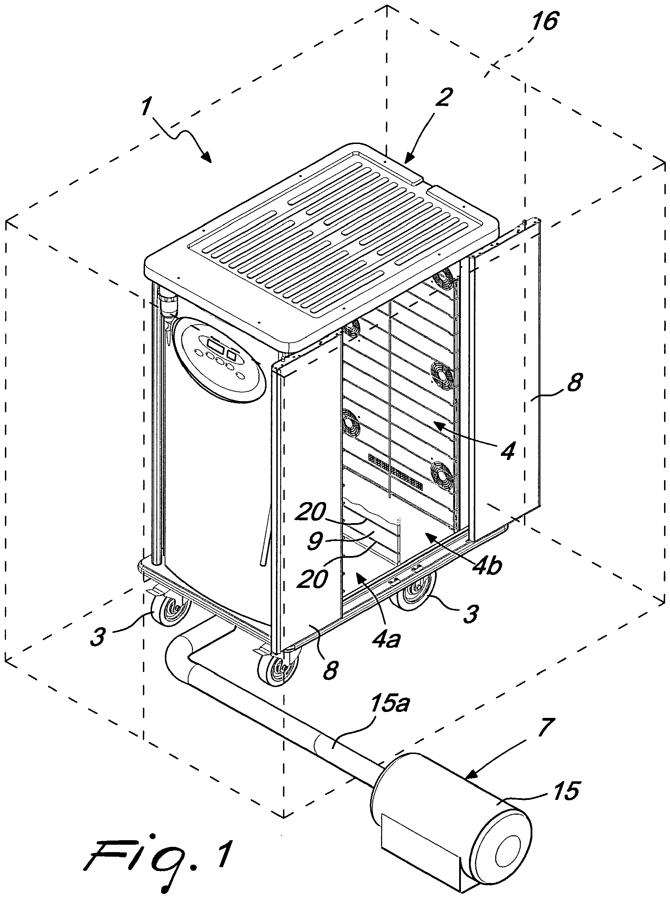

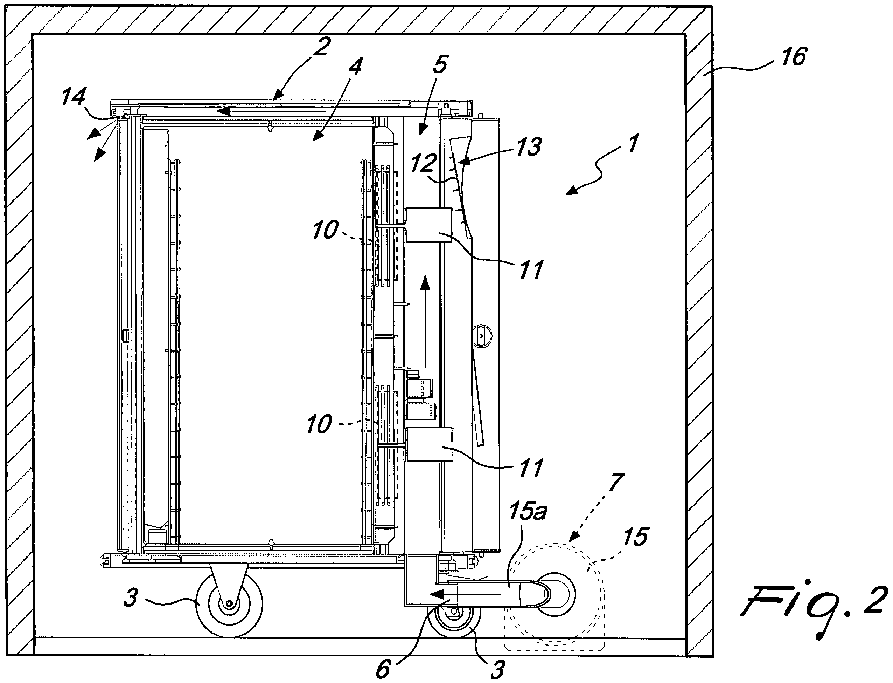

The trolley shown in Figures 1 and 2 is a trolley for trays designed to carry simultaneously foods to be served hot and foods to be served cold.

The vertical partition 9 is in fact provided with a plurality of horizontal slots 20, provided with suitable gaskets, which can engage an intermediate portion of a tray which can be rested, with two opposite sides thereof, on supporting elements which are applied to the walls of the half-chambers 4a, 4b, which face the vertical partition 9 so that one portion of the tray is within the half-chamber 4a, for example the cooled half-chamber, and the other portion of the tray is in the half-chamber 4b, for example the heated half-chamber.

The service compartment 5 is extended predominantly laterally to the chamber 4, from which it is separated in a per se known manner. The port 6 is preferably arranged proximate to the bottom of the service compartment 5.

The different electrical and/or electronic components required for the operation of the trolley, such as for example the actuation motors 11 of the fans 10, the electrical wiring, the electronic board 12 of the control console 13 arranged on a side wall of the box-like body 2, and other electrical and/or electronic components, are arranged inside the service compartment 5.

The service compartment 5 is connected to the outside through one or more openings or slots, which are provided for this purpose to vent the air, such as for example an opening 14 provided proximate to the upper face of the service compartment 5, or are simply produced by a less than perfect tightness of the service compartment 5.

The means 7 for introducing a pressurized gas, constituted preferably by air, comprise a pneumatic pump or compressor 15, which is connected to the port 6 by means of its delivery duct 15a.

In practice, when the trolley according to the invention must be washed, the port 6 is connected beforehand to the delivery duct of the pneumatic pump or compressor 15, which is actuated so as to bring to, and maintain, during washing, the inside of the service compartment 5 at a pressure that is higher than the outside pressure.

Due to this fact, the trolley according to the invention can be washed even inside booths or tunnels 16 for automated washing and be struck simultaneously by a plurality of jets of the washing liquid which are differently oriented. The pressurization of the service compartment 5 effectively prevents the penetration of liquids or vapors during washing into the service compartment 5, adequately preserving the electrical and/or electronic components accommodated therein.

In practice it has been found that the trolley according to the invention fully achieves the intended aim, since it can be washed even in an automated manner inside washing booths or tunnels without causing problems for the electrical and/or electronic components with which it is provided.

Although the invention has been explained with reference to a particular type of trolley, it can be applied to other types of trolleys, for example trolleys with a single chamber which is heated or cooled or with a plurality of chambers and with one or more service compartments.

The trolley thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A trolley (1) for carrying and distributing food trays or food containers in general, comprising a box-like body (2) which is mounted on wheels (3), and in which there are at least one chamber (4) for containing trays or containers of foods to be carried and distributed and at least one service compartment (5) which contains electrical and/or electronic devices to bring to, or keep at, preset temperatures said at least one chamber (4), **characterized in that** said service compartment (5) is connected to at least one port (6) which can be connected to means (7) for introducing a pressurized gas in order to pressurize said service compartment (5).

2. The trolley according to claim 1, **characterized in that** said port (6) is arranged on the outer side of said box-like body (2).

3. The trolley according to claim 1, **characterized in that** said box-like body (2) is substantially shaped like a parallelepiped.

4. The trolley according to one or more of the preceding claims, **characterized in that** said port (6) is arranged proximate to the bottom of said service compartment (5).

5. The trolley according to one or more of the preceding claims, **characterized in that** said service compartment (5) is connected to the outside through at least one opening (14) which is arranged proximate to the upper face of said service compartment (5).

6. A method for washing trolleys (1) for carrying and distributing food trays or food containers in general, of the type comprising a box-like body (2) which is mounted on wheels (3), and in which there are at least one chamber (4) for containing trays or containers of foods to be carried and distributed and at least one service compartment (5) which contains electrical and/or electronic devices to bring to, or keep at, preset temperatures said at least one chamber (4), **characterized in that** during the washing of the trolley the interior of said service compartment (5) is kept at a pressure which is higher than the outside pressure.

7. The method according to claim 6, **characterized in that** during washing the inside of said service compartment (5) is kept at a pressure which is higher than the outside pressure by introducing a pressurized gas into said service compartment (5).

8. The method according to one or more of claims 6, 7, **characterized in that** said gas is constituted by air.

9. The method according to one or more of claims 6-8, **characterized in that** said washing is performed by arranging the trolley (1) inside a washing tunnel or booth and striking it with jets of a washing liquid.

## Patentansprüche

1. Wagen (1) für den Transport und die Verteilung von Speisetabletts oder Lebensmittelbehältern im Allgemeinen, bestehend aus einem kastenförmigen Gehäuse (2), welches auf Rädern (3) montiert ist, und in welchem sich mindestens eine Kammer (4) für die Aufnahme von zu transportierenden und zu verteilenden Tabletts oder Lebensmittelbehältern und mindestens eine Servicekammer (5) befinden, welche elektrische und/oder elektronische Vorrichtungen enthält um die mindestens eine Kammer (4) auf voreingestellte Temperaturen zu bringen oder zu halten, **dadurch gekennzeichnet, dass** die Servicekammer (5) an mindestens einen Einlass (6) angeschlossen ist, welcher an Mittel (7) für die Einführung eines Druckgases angeschlossen werden kann, um die Servicekammer (5) unter Druck zu setzen.

2. Wagen nach Anspruch 1, **dadurch gekennzeichnet, dass** der Einlass (6) auf der Außenseite des kastenförmigen Gehäuses (2) angeordnet ist.

3. Wagen nach Anspruch 1, **dadurch gekennzeichnet, dass** das kastenförmige Gehäuse (2) im Wesentlichen wie ein Parallelpipedon geformt ist.

4. Wagen nach einem oder mehreren der vorangehenden Ansprüche, **dadurch gekennzeichnet, dass** der Einlass (6) dem Boden der Servicekammer (5) benachbart angeordnet ist.

5. Wagen nach einem oder mehreren der vorangehenden Ansprüche, **dadurch gekennzeichnet, dass** die Servicekammer (5) mit der Außenseite durch mindestens eine Öffnung (14) verbunden ist, welche der oberen Fläche der Servicekammer (5) benachbart angeordnet ist.

6. Verfahren für das Waschen von Wagen (1) für den Transport und die Verteilung von Speisetabletts oder Lebensmittelbehältern im Allgemeinen, des Typs bestehend aus einem kastenförmigen Gehäuse (2), welches auf Rädern (3) montiert ist, und in welchem sich mindestens eine Kammer (4) für die Aufnahme von zu transportierenden und zu verteilenden Tabletts oder Lebensmittelbehältern und mindestens eine Servicekammer (5) befinden, welche elektrische und/oder elektronische Vorrichtungen enthält um die mindestens eine Kammer (4) auf voreingestellte Temperaturen zu bringen oder zu halten, **dadurch gekennzeichnet, dass** wähnend des Waschens des Wagens das Innere der Servicekammer (5) unter einem Druck gehalten wird, welcher höher als der Außendruck ist.

7. Verfahren nach Anspruch 6, **dadurch gekennzeichnet, dass** während des Waschens das Innere der Servicekammer (5) unter einem Druck gehalten wird, welcher höher als der Außendruck ist, durch Einführung eines Druckgases in die Servicekammer (5) .

8. Verfahren nach einem oder mehreren der Ansprüche 6, 7, **dadurch gekennzeichnet, dass** das Gas durch Luft gebildet ist.

9. Verfahren nach einem oder mehreren der Ansprüche 6 - 8, **dadurch gekennzeichnet, dass** das Waschen durchgeführt wird durch Einbringen des Wagens (1) in das Innere eines Waschtunnels oder einer Waschkabine und Abspritzen desselben mit Strahlen einer Waschflüssigkeit.

## Revendications

1. Chariot (1) pour transporter et distribuer des plateaux d'aliments ou des contenants pour aliments en général, comprenant un corps en forme de boîte (2) qui est monté sur des roues (3), et dans lequel on trouve au moins une chambre (4) pour contenir les plateaux ou les contenants d'aliments à transporter et distribuer et au moins un compartiment de service (5) qui contient des dispositifs électriques et/ou électroniques pour amener ou maintenir ladite au moins une chambre (4) à des températures prédéterminées, **caractérisé en ce que** ledit compartiment de service (5) est raccordé à au moins un orifice (6) qui peut être raccordé à des moyens (7) pour introduire un gaz sous pression afin de mettre ledit compartiment de service (5) sous pression.

2. Chariot selon la revendication 1, **caractérisé en ce que** ledit orifice (6) est agencé sur le côté externe dudit corps en forme de boîte (2).

3. Chariot selon la revendication 1, **caractérisé en ce que** ledit corps en forme de boîte (2) a sensiblement une forme de parallélépipède.

4. Chariot selon une ou plusieurs des revendications précédentes, **caractérisé en ce que** ledit orifice (6) est agencé à proximité du fond dudit compartiment de service (5).

5. Chariot selon une ou plusieurs des revendications précédentes, **caractérisé en ce que** ledit compartiment de service (5) est raccordé à l'extérieur par au moins une ouverture (14) qui est agencée à proximité de la face supérieure dudit compartiment de service (5).

6. Procédé pour laver des chariots (1) pour transporter et distribuer des plateaux d'aliments ou des contenants pour aliments en général, du type comprenant un corps en forme de boîte (2) qui est monté sur des roues (3), et dans lequel on trouve au moins une chambre (4) pour contenir des plateaux ou des contenants d'aliments à transporter et distribuer et au moins un compartiment de service (5) qui contient des dispositifs électriques et/ou électroniques pour amener ou maintenir ladite au moins une chambre (4) à des températures prédéterminées, **caractérisé en ce que** pendant le lavage du chariot, l'intérieur dudit compartiment de service (5) est maintenu à une pression qui est supérieure à la pression extérieure.

7. Procédé selon la revendication 6, **caractérisé en ce que** pendant le lavage, l'intérieur dudit compartiment de service (5) est maintenu à une pression qui est supérieure à la pression extérieure en introduisant un gaz sous pression dans ledit compartiment de service (5).

8. Procédé selon une ou plusieurs des revendications 6, 7, **caractérisé en ce que** ledit gaz est constitué par de l'air.

9. Procédé selon une ou plusieurs des revendications 6 à 8, **caractérisé en ce que** ledit lavage est réalisé en agençant le chariot (1) à l'intérieur d'un tunnel ou une cabine de lavage et en le frappant avec des jets d'un liquide de lavage.
